# EUROPÄISCHE PATENTSCHRIFT

(11) **EP 2 258 972 B1**
(45) Veröffentlichungstag und Bekanntmachung des Hinweises auf die Patenterteilung: **09.05.2012**
(21) Anmeldenummer: 10005832.0
(22) Anmeldetag: 06.06.2010
(51) Int. Cl.: F16L 13/00, F16L 13/11, F16L 23/024, B23P 11/02

(54) **Bauteil mit Flansch sowie Verfahren zur Herstellung desselben**
Component with flange and method for production of same
Elément avec bride et son procédé de fabrication

(30) Priorität: 06.06.2009 DE 102009024126
(43) Veröffentlichungstag der Anmeldung: 08.12.2010
(73) Patentinhaber: Thoni, Lothar, 9108 Jakobsbad (CH)
(72) Erfinder: Thoni, Lothar, 9108 Jakobsbad (CH)
(74) Vertreter: Patentanwälte Bitterich, Dr. Keller, Schwertfeger

(56) Entgegenhaltungen:
- WO-A1-2007/115634
- DE-C1- 19 619 129
- FR-A5- 2 109 232
- GB-A- 966 772
- US-A1- 2006 118 327
- US-A1- 2009 045 621

## Beschreibung

Die Erfindung betrifft zum einen ein Bauteil mit zumindest einem Flansch nach dem Oberbegriff des Patentanspruchs 1 sowie ein Verfahren zum Zusammenfügen eines Bauteils, insbesondere eines Rohres oder eines Gehäuseteils, mit einem Flansch nach dem Oberbegriff des Patentanspruchs 13. Ein derartiges Bauteil ist bekannt aus Dokument WO 2007/115634 A1.

Flansche werden an Rohren oder an rohrförmige Anschlussstutzen sonstiger Bauteile, wie Gehäuse, Deckel etc. angebracht, um diese mit anderen Bauteilen zu verbinden. An solche Verbindungen zwischen Flansch und Rohr werden zunehmend hohe Anforderungen gestellt. Sie sollen stabil genug sein, um die zwischen den zu verbindenden Bauteilen im Betriebszustand wirkenden Kräfte aufnehmen zu können, ohne dass dabei die Festigkeit der Verbindung von Flansch und Rohr gefährdet ist. Gleichzeitig müssen bei druckfesten Ausführungsarten die Flansche rundum immer absolut druckdicht mit den zugehörigen Rohren verbunden sein, da das in den Rohren geführte Medium sonst über die Fuge zwischen Rohraußenseite und Flanschinnenseite nach außen gelangen kann.

Diese Dichtigkeitsanforderung ist insbesondere dann unbedingt zu erfüllen, wenn es sich um ein als kritisch eingestuftes Medium handelt, das für die Umwelt oder die Gesundheit des Menschen schädlich ist. Ein solcher Anwendungsfall liegt bei Flanschverbindungen vor, die zur Verbindung von Gehäuseteilen von gekapselten, gasisolierten Hochspannungs- oder Mittelspannungs-Schaltanlagen zum Einsatz kommen. In solchen Anlagen wird in aller Regel Schwefelhexafluorid (SF6) als Isolier- und Löschgas verwendet, um den Lichtbogen beim Schaltvorgang zum Erlöschen zu bringen und dadurch den Stromfluss zuverlässig zu unterbrechen. SF6 gilt jedoch als das wirksamste bekannte Treibhausgas, so dass an die auf diesem Gebiet eingesetzten Flanschverbindungen sehr hohe Dichtigkeitsanforderungen gestellt werden, um SF6-Emissionen sicher zu vermeiden.

Vor diesem Hintergrund werden die Flansche im SF6-Schaltanlagenbereich bisher ausschließlich durch Schweißen mit den entsprechenden Rohrabschnitten verbunden, wobei die Schweißarbeiten wegen des sicherheitsrelevanten Charakters dieser Anlagenteile nur von zertifiziertem Schweißpersonal durchgeführt werden dürfen und die Schweißnähte außerdem noch einer nachgeschalteten Prüfung mit Ultraschall oder Isotopen-Durchstrahlung (Röntgen) unterzogen werden müssen. Ein weiterer Nachteil des Anschweißens von Flanschen liegt darin, dass durch die hohen Temperaturen und die daraus resultierenden inneren Spannungen die Werkstücke verformt werden. Flansche für Schaltergehäuse und Kapselungen in Hochspannungs- und Mittelspannungs-Schaltanlagen können Durchmesser von mehreren Metern haben, so dass bei den hier erforderlichen langen Schweißnähten und dem damit einhergehenden hohen Wärmeeintrag die Verformungen ein großes Ausmaß erreichen können. Daher müssen diese Verformungen zumeist in weiteren Arbeitsschritten wieder gerichtet werden. Da die Schweißnähte zudem abschließend noch verschliffen bzw. verputzt werden müssen, stellt das Schweißen einen sehr personalintensiven und somit sehr teuren Verbindungsprozess dar.

Alternativ zum Schweißen ist es schon lange bekannt, Flansche auf entsprechende Rohrabschnitte aufzupressen. Insbesondere bei großen Flanschdurchmessern werden diese Pressverbindungen durch Aufschrumpfen, also durch Erwärmung bzw. Kühlung des Flansches bzw. des entsprechenden Rohrabschnitts hergestellt. Durch die großen Schrumpfkräfte sind vorteilhafterweise keine Schweißverbindungen mehr erforderlich, wobei dennoch eine sichere, kraftschlüssige Verbindung gewährleistet ist. Allerdings tritt bei solchen Pressverbindungen das Problem auf, dass diese ohne Einsatz weiterer Dichtmittel nicht hermetisch und insbesondere nicht gas- und druckdicht ausgebildet sind.

Aus dem Stand der Technik ist es zwar auch schon bekannt, unter Zuhilfenahme von einzufüllendem Klebstoff Verbindungen von Flansch und Rohr nach außen stoffschlüssig abzudichten. So sei hier beispielsweise auf die DE 10 2006 016 098 A1 verwiesen, die ein Transportrohr für Dickstoffe offenbart, bei dem zwischen einem Kupplungsring und der Außenfläche eines Druckrohres ein Spalt gebildet ist, der mit Klebstoff aufgefüllt ist. Eine solche Abdichtung würde aber den hohen Festigkeits- und Dichtigkeitsanforderungen des oben erläuterten Anwendungsfalles nie gerecht werden können, da der notwendige Spaltabstand zwischen Kupplungsring und Rohraußenwand mit einem Verlust an Presskontaktfläche und somit an Verbindungsfestigkeit einhergeht.

Es ist daher die Aufgabe der vorliegenden Erfindung, eine betriebssichere Verbindung zwischen einem Flansch und einem Rohrabschnitt eines Bauteils zu schaffen, welche druckgasdicht ist, eine hohe Verbindungsfestigkeit besitzt und dabei kostengünstig herstellbar ist. Auch ist es die Aufgabe der vorliegenden Erfindung, ein einfaches Verfahren zur Herstellung einer solchen Verbindung bereitzustellen.

Diese Aufgabe wird durch ein Bauteil mit zumindest einem Flansch nach Anspruch 1 gelöst, wobei vorteilhafte Ausführungsformen in den Unteransprüchen beschrieben sind.

Beim erfindungsgemäßen Bauteil mit Flansch, welches im einfachsten Fall durch ein gerades Rohr mit endseitig angebrachtem Flansch gebildet ist, wird in Anbetracht der oben genannten Nachteile auf den Einsatz von Schweißtechnik zur Verbindung des Flansches mit einem Rohrabschnitt des Bauteils verzichtet. Stattdessen ist der rohrförmige Stutzen des Flansches auf den betreffenden Rohrabschnitt aufgepresst, vorzugsweise thermisch aufgeschrumpft. Um hinsichtlich des im Bauteil geführten Mediums eine absolute Dichtigkeit zu erreichen, ist in der Kontaktfuge zwischen dem Außenumfang des Rohrs und dem Innenumfang des Flanschstutzens mindestens eine umlaufende Nut vorgesehen, die vollständig mit einem Dichtmittel gefüllt ist. Die Nut kann also am Innenumfang des Rohrstutzens oder am Außenumfang des Rohres oder beidem angeordnet sein. Das Dichtmittel wird über eine in die Nut einmündende Füllbohrung, die durch die Wand des Rohres bzw. des Flanschstutzens bis zur Innenseite bzw. Außenseite durchtritt, eingefüllt und bildet in der Kontaktfuge eine stoffschlüssige Abdichtung der durch Schrumpfen hergestellten Pressverbindung von Flansch und Rohrabschnitt.

Für die Ausbildung der Nut bestehen gemäß der Erfindung verschiedene Möglichkeiten. So können mehrere planparallele, in axialem Abstand koaxial zueinander verlaufende Ringnuten vorgesehen sein, die axial beabstandete Strömungsbarriere darstellen. Das Befüllen der einzelnen Ringnuten kann individuell, das heißt sukzessive, oder über einen axialen Verteilerkanal in einem Arbeitsschritt erfolgen.

Bei einer anderen Ausführungsform ist die Nut wendelförmig ausgebildet, läuft also in einer Schraubenlinie entlang der Kontaktfuge. Auf diese Weise wird der durch die einzelnen Windungen vorgegebene potentielle Strömungsweg für das Medium vom Anfang des Verbindungsbereichs bis zum Ende in Abhängigkeit der Windungsanzahl um ein Vielfaches vergrößert. Infolge des vorhandenen Strömungswiderstands über die Länge des aufgezwungenen Strömungswegs wird der vorhandene Druck allmählich abgebaut bis eine vollständige Dichtigkeit erreicht ist. Gemäß der Erfindung weist die Nut zu diesem Zweck mindestens 4 Windungen, vorzugsweise mindestens 8 oder besser mindestens 10 oder mindestens 12 Windungen auf.

In einer bevorzugten Ausführungsform der Erfindung sind die beiden oben genannten Varianten miteinander kombiniert. Dabei ist die Nut auf der Innenseite des Flanschstutzens und/oder Außenseite des Rohres durch eine wendelförmige Nut gebildet, deren Enden wiederum jeweils in einer geschlossenen Ringnut münden. Über eine in eine der beiden Ringnuten einmündende Füllbohrung lässt sich der gesamte Nutverlauf mit dem Dichtmaterial leicht auffüllen, so dass in hermetisch abdichtender Weise innerhalb zweier beabstandeter Ringdichtungen zusätzlich eine sich annähernd über den gesamten Längserstreckungsbereich des Flanschstutzens erstreckende Wendeldichtung gebildet ist. Eine solche Dichtkonstruktion macht es dem im Bauteil geführten Medium, selbst wenn diese gasförmig ist und unter hohem Druck steht, unmöglich, zwischen den in Presskontakt stehenden Flächen von Flanschinnenseite und Rohraußenseite in die umgebende Atmosphäre auszutreten, weil sich dem Medium in diesem Fugenbereich über den gesamten Umfang mehrere, nacheinander folgende, aus mit Dichtmittel gefüllten Nutabschnitten gebildete Dichtbarrieren in den Weg stellen.

Gemäß einer weiteren Ausführungsform der Erfindung ist jeweils eine wendelförmige Nut an der Außenseite des Rohrabschnitts und Innenseite des Flanschstutzens vorgesehen, wobei die beiden Nuten entgegengesetzte Umlaufrichtungen besitzen. Bei einer solchen Ausführungsform kreuzen sich also die Nuten, wobei die wendelförmig verlaufende Pressfläche zwischen zwei Windungen der einen Nut von der anderen Nut unterbrochen wird, die auf diese Weise eine oder mehrere Strömungsbarrieren bildet.

Allen Varianten ist gemein, dass die seitlich an die Nut anschließenden Bereiche des Rohrstutzens und des Rohrabschnitts über die gesamte Länge der Nut in Pressverbindung miteinander stehen. Bis auf die Breite der Nuten stehen also der Rohrabschnitt mit seinem Außenumfang und der Flanschstutzen mit seinem Innenumfang in Presskontakt miteinander und gewährleisten so eine große mechanische Stabilität der Pressverbindung.

Die Aufgabe wird des Weiteren gelöst durch ein Verfahren zum Zusammenfügen eines Bauteils, wie eines Rohres oder eines Gehäuseteils, mit einem Flansch, entsprechend der im Anspruch 13 genannten Verfahrensschritte, wobei sich vorteilhafte Ausführungsformen aus den Unteransprüchen ergeben.

Durch das erfindungsgemäße Verfahren kann ein Flansch absolut druckgas- und flüssigkeitsdicht mit einem Bauteil verbunden werden, wobei die Herstellung einer solchen Verbindung aber im Gegensatz zu bekannten Schweißverfahren auf eine erheblich zeit- und personalsparendere Weise erfolgt. Das Verfahren beruht auf der besonderen Kombination zweier Fügetechniken, dem Schrumpfen und dem Kleben. Dabei wird zunächst eine hohe mechanische Verbindungsfestigkeit der Verbindung von Flansch und Rohrabschnitt dadurch erreicht, dass diese Komponenten in einem durch Aufwärmung und Abkühlung des Flansches gesteuerten Aufschrumpfverfahren zusammengeführt werden, bevor im Anschluss eine hermetische Abdichtung dieser Pressverbindung von Flansch und Rohrabschnitt dadurch erreicht wird, dass ein dichtendes Klebemittel in eine Innennut des aufgeschrumpften Flanschstutzens eingefüllt wird.

Um das erfindungsgemäße Verfahren zum Zusammenfügen eines Bauteils mit einem Flansch weitestgehend automatisiert durchführen zu können, wird eine Montageeinrichtung vorgeschlagen, bei der auf einer gemeinsamen Grundplatte ein Lagerelement zur positionsstabilen Aufnahme des Bauteils und eine Verschiebeeinheit zur linear bewegbaren Aufnahme des Flansches angeordnet sind. Der Flansch ist bevorzugterweise in einem pneumatischen Backenfutter der Verschiebeeinheit eingespannt und lässt sich zur Einleitung des Aufschrumpfprozesses über eine an den Flansch anlegbare Induktionsheizung erwärmen, wobei anschließend die Verschiebeeinheit den Flansch in längsaxialer Richtung auf den betreffenden Rohrabschnitt des Bauteils aufschiebt, bevor der Flansch an der Umgebungsluft oder mit einer Kühlvorrichtung abgekühlt wird, bis dieser eine Pressverbindung mit dem Rohrabschnitt des Bauteils eingeht.

Insgesamt ergeben sich bei der Verwendung des erfindungsgemäßen Bauteils mit Flansch sowie des zu ihrer Verbindung hier vorgeschlagenen Verfahrens vor allem folgende Vorteile:
- Die Verwendung der Aufschrumpftechnik zur Verbindung von Flansch und Rohrabschnitt des Bauteils ist erheblich materialschonender als das sonst übliche Anschweißen des Flansches und liefert trotzdem eine besonders stabile und formtreue Verbindung von Flansch und Rohr.
- Die Stabilität der Schrumpfverbindung wird durch das Einbringen einer Nut auf der Stutzeninnenseite des Flansches oder Außenseite des Rohres nicht geschwächt, weil der ausgesparte Flächenanteil für die Nutbreiten in Relation zur weiterhin in Presskontakt stehenden Kontaktfläche vernachlässigbar ist.
- Eine Abdichtung der in Presskontakt stehenden Flächen von Flansch und Rohrabschnitt wird nicht durch separate, an diese Kontaktflächen stirnseitig angrenzende Dichtmittel erzielt, was die notwendige Verbindungslänge vergrößern würde, weil an die Presszone eine eigene Dichtzone anschließen müsste, sondern die Dichtmittel sind in die vorliegende Pressverbindung integriert, indem in diesem Presskontaktbereich zwischen Flansch und Rohr eine umlaufende Nut eingearbeitet ist, die von außen mit einem abdichtenden Klebemittel befüllbar ist. Daraus ergibt sich der Vorteil einer kompakten Konstruktion im Verbindungsbereich.

Anhand der Zeichnungen, in denen ein Ausführungsbeispiel der erfindungsgemäßen Verbindung von Flansch und Rohr sowie ein Ausführungsbeispiel einer Montageeinrichtung zur Durchführung des erfindungsgemäßen Verfahrens zwecks Herstellung einer solchen Verbindung dargestellt sind, werden im Folgenden die Erfindung sowie Ausgestaltungen und Vorteile näher erläutert.

Es zeigt
- Fig. 1: einen Längsschnitt durch eine erfindungsgemäße Baugruppe in Form eines Rohres mit zwei endseitigen Flanschen,
- Fig. 2: eine Vergrößerung des Details II aus Fig. 1 im Kontaktbereich von Rohrende und aufgebrachtem Flansch,
- Fig. 3: der bei der erfindungsgemäßen Baugruppe nach Fig. 1 verwendete Flansch in Einzeldarstellung im Längsschnitt, und
- Fig. 4: eine Montageeinrichtung zum erfindungsgemäßen Zusammenfügen eines Rohres mit zwei Flanschen in seitlicher Gesamtansicht.

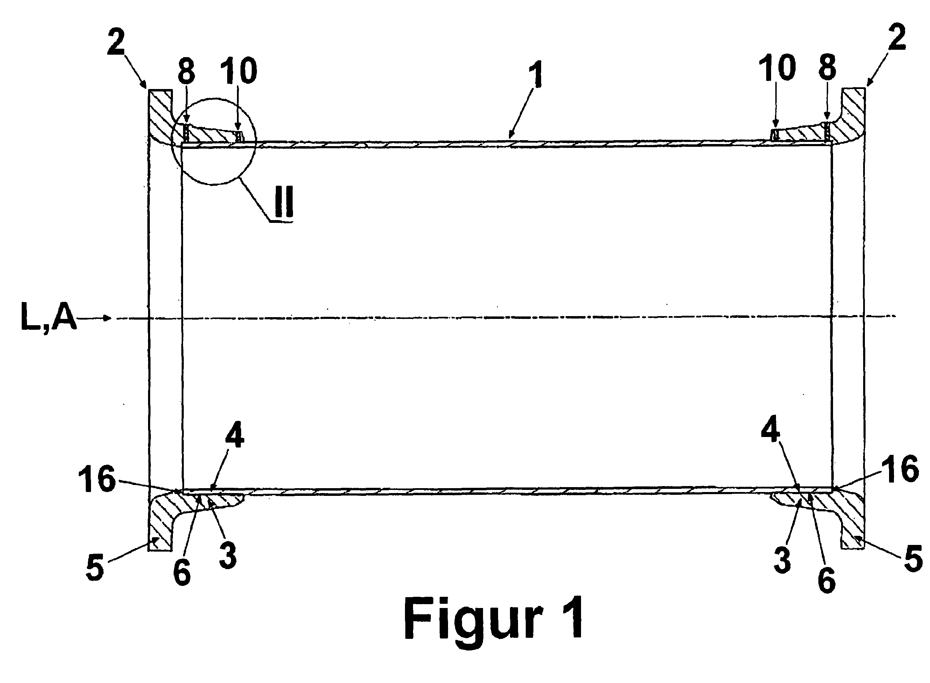

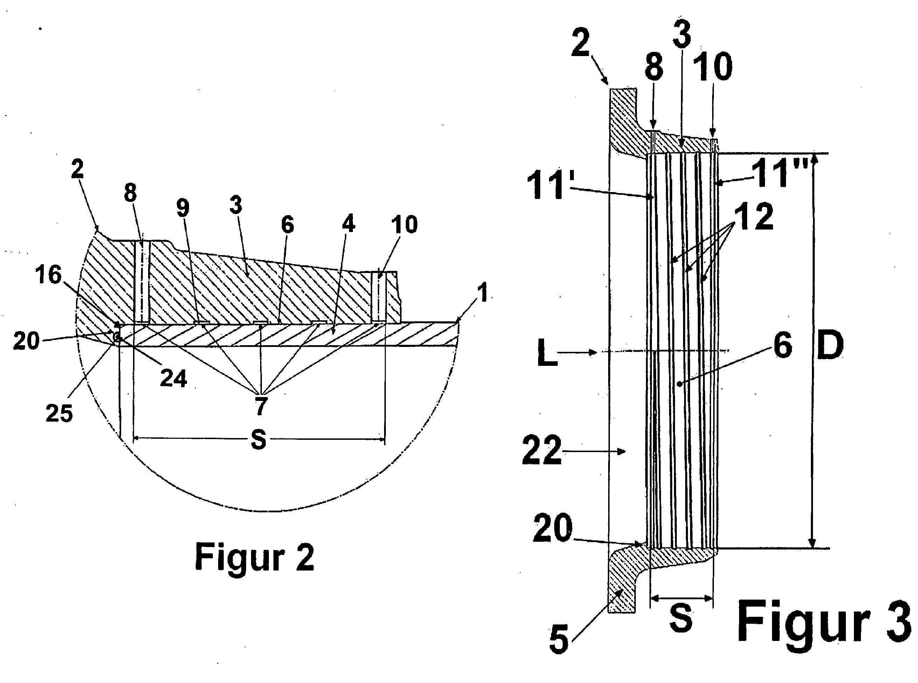

In den Fig. 1 und 2 ist ein Rohr 1 dargestellt, an dessen zwei Längsenden in gleicher Weise jeweils ein Flansch 2 aufgebracht worden ist, der in Fig. 3 nochmals separat dargestellt ist. Solche Baugruppen aus Flansch 2 und Rohr 1 bzw. aus Flansch 2 und sonstigen Bauteilen mit wenigstens einem Rohrabschnitt werden im Bereich der Energieverteilung und Hochspannungstechnik als druckgasdichte Isolationsgehäuse verwendet und aus hochwertigem Aluminiumguss gefertigt, wobei bei den in diesem Bereich eingesetzten Rohren oder sonstigen Gehäuseteilen Durchmesserabmessungen von mehreren Metern üblich sind.

Der in Fig. 3 gezeigte Flansch 2 setzt sich in bekannter Weise aus einem rohrförmigen Flanschstutzen 3 und aus einem von diesem rohrförmigen Flanschstutzen 3 radial hervorstehenden Flanschkragen 5 zusammen. Die Verbindung des Flansches 2 mit dem endseitigen Rohrabschnitt 4 des Rohres 1 gemäß Fig. 1 und 2 ist nach der vorliegenden Erfindung durch die besondere Kombination zweier Fügetechniken realisiert. Zunächst ist der Flanschstutzen 3 auf dem Rohrabschnitt 4 thermisch aufgeschrumpft, das heißt infolge von Erwärmung und anschließender Abkühlung des Flansches 2 sitzt die Innenwandung 6 des Flanschstutzens 3 mit Presssitz auf der Außenwandung des entsprechenden Rohrabschnitts 4.

Um die für den oben genannten Anwendungszweck erforderliche Dichtigkeit der Verbindung zu gewährleisten, ist aber zusätzlich in der in Pressverbindung stehenden Innenwandung 6 des Flanschstutzens 3 mindestens eine um die Längsachse L des Flansches 2 umlaufende Nut 7 angeordnet, die in der Detailansicht aus Fig. 2 und der Einzeldarstellung des Flansches 2 aus Fig. 3 deutlich zu erkennen ist. Diese Nut 7 wird über eine durch die Wand des Flanschstutzens 3 nach außen hindurchtretende und radial zur Längsachse L des Flansches 2 verlaufende Füllbohrung 8 mit einem fließfähigen, flüssigen oder pastösen Dichtmittel 9 entlang ihrer gesamten Länge aufgefüllt, wobei vorteilhafterweise eine weitere, radial nach außen durchtretende Bohrung 10 in die Nut 7 mündet, die der Entlüftung dient, um die durch das Dichtmittel 9 verdrängte Luft ausweichen zu lassen und so eine vollständige Auffüllung der Nut 7 mit Klebemittel 9 zu gewährleisten.

Als Dichtmittel 9 wird bevorzugt ein Zweikomponentenkleber auf Epoxidharzbasis verwendet, der bei Raumtemperatur oder beschleunigt unter Wärmezufuhr aushärtet und somit zusätzlich zur Pressverbindung eine stoffschlüssige Verbindung zwischen Flanschstutzen 3 und Rohrabschnitt 4 bildet, womit der Flansch 2 zum Rohr 1 hermetisch abgedichtet ist und eine Leckage zwischen der Innenwandung 6 des Flanschstutzens 3 und der damit in Presskontakt stehenden Außenwandung des Rohrabschnitts 4 vermieden wird. Durch geeignete Wahl des Mischungsverhältnisses der Komponenten kann die Viskosität des ausgehärteten Dichtmittels 9 eingestellt werden. So ist es möglich, dass das Dichtmittel 9 nach dem Aushärten hart und damit weder elastisch noch plastisch verformbar ist. Ebenso kann das Dichtmittel 9 eine zähflüssige Konsistenz besitzen und ist damit in der Lage geringfügige Bewegungen in der Kontaktfuge auszugleichen, ohne die Dichtwirkung zu beeinträchtigen. Zu diesem Zweck ist eine Viskosität von mindestens 10⁷ mPa*s bevorzugt.

Im vorliegenden Ausführungsbeispiel ist der genaue Verlauf der Nut 7 aus Fig. 3 am deutlichsten zu erkennen und vorteilhafterweise so gewählt, dass die Nut 7 aus einem wendelförmigen, um die Längsachse L des Flansches 2 verlaufenden Nutabschnitt 12 besteht, deren beide Enden jeweils in einer Ringnut 11', 11" münden. Die Nut 7 besteht also aus einer Kombination aus wendelförmiger Nut und ringförmiger Nuten. Dieser Dichtungsverlauf hat sich als besonders effizient erwiesen, weil damit die abzudichtende Presskontaktfläche von Flanschstutzen 3 und Rohrabschnitt 4 über annähernd ihre gesamte Länge mit mehreren Dichtbarrieren geschützt ist. Die Längserstreckung S der Nut 7 entspricht nämlich annähernd der Länge des press anliegenden Flanschstutzens 3, wobei entlang dieser Längserstreckung S die wendelförmige Nut 12 zwischen Ausmündung aus der ersten Ringnut 11' und Einmündung in die zweite Ringnut 11" vier Umläufe um die Längsachse L des Flansches 2 vollzieht, wodurch einschließlich der beiden abschließenden Ringnuten 11', 11" insgesamt fünf im Umfang geschlossene, mit Klebemittel 9 aufgefüllte Dichtkanäle (vergleiche Fig. 2) ein unerwünschtes Austreten von Medium aus diesem Überlappungsbereich von Flanschstutzen 3 und Rohrabschnitt 4 effektiv blockieren. Ein weiterer Vorteil dieser wendelförmigen Nutgeometrie 12 ist, dass nur eine einzige Füllbohrung 8 notwendig ist, um den gesamten Längserstreckungsbereich S der Nut 7 aufzufüllen.

Neben dieser bevorzugten Ausführungsform liegen jedoch auch andere - nicht dargestellte - Varianten im Rahmen der Erfindung, bei denen mehrere Ringnuten in axialer Staffelung koaxial angeordnet sind oder bei denen lediglich eine Wendelnut mit ausreichend vielen Windungen für eine erhöhte Dichtwirkung sorgt.

Sowohl aus später zu erläuternden fertigungstechnischen Gründen, als auch aus Gründen einer weiteren Verbesserung der Abdichtung, springt der Innendurchmesser des Flansches 2 vom mit dem Rohrabschnitt 4 in Presskontakt stehenden Stutzendurchmesser D in einer Stufe 20 nach innen, wobei diese Stufe 20 einen Längsanschlag 16 für die Stirnfläche des Rohrabschnitts 4 bildet. Zur Verbesserung der Abdichtung kann zwischen dieser Stufe 20 und der Stirnfläche des Rohrabschnitts 4 ein zusätzlicher Dichtkörper vorgesehen sein, beispielsweise in Form eines O-Ringes 24, der in eine entsprechende Nut 25 der Stufe 20 eingelegt ist.

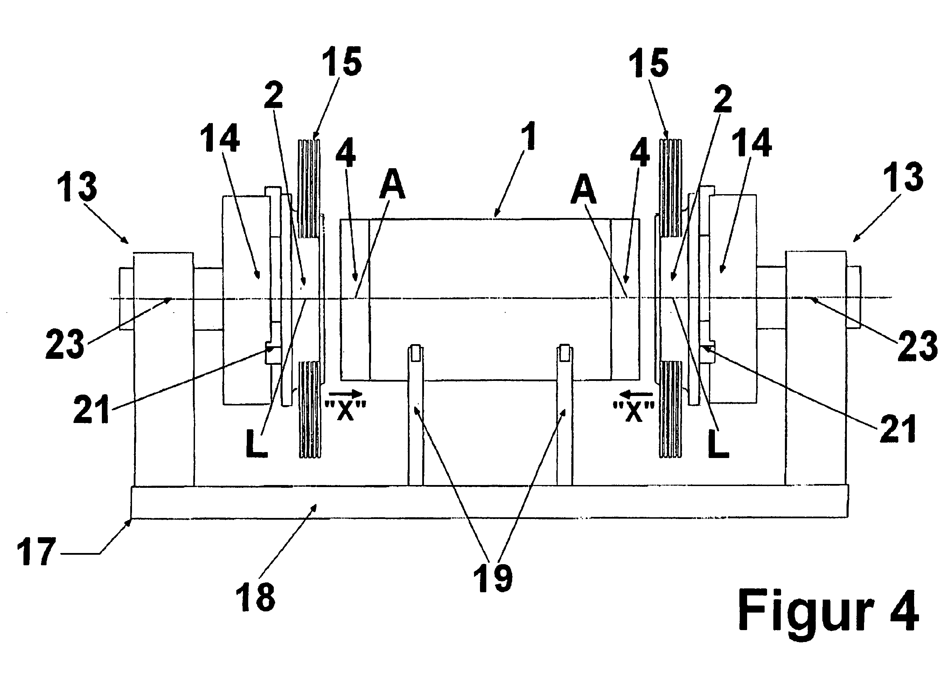

In Fig. 4 ist eine Montageeinrichtung 17 dargestellt, mit welcher die in Fig. 1 dargestellte Verbindung des Rohres 1 mit zwei Flanschen 2 unter Ausführung des erfindungsgemäßen Verfahrens hergestellt werden kann. Die Montageeinrichtung 17 umfasst zwei voneinander horizontal beabstandete Verschiebeeinheiten 13 und zwei zwischen diesen beiden Verschiebeeinheiten 13 angeordnete, ebenfalls voneinander horizontal beabstandete Auflagestützen 19, wobei Verschiebeeinheiten 13 und Auflagestützen 19 auf einer gemeinsamen Grundplatte 18 befestigt sind.

Das erfindungsgemäße Verfahren zum Zusammenfügen von Rohr 1 und Flanschen 2 läuft nun wie folgt ab: Zunächst wird das Rohr 1 horizontal auf die beiden Auflagestützen 19 gelegt, wobei die Auflagestützen 19 dafür sorgen, dass das Rohr 1 nicht nur vertikal, sondern auch in Querrichtung, das heißt senkrecht zur in Fig. 4 gezeigten Zeichnungsebene, während des Verbindungsprozesses positionsstabil gelagert ist. Dabei erstreckt sich das so gelagerte Rohr 1 längsgerichtet zwischen den beiden Verschiebeeinheiten 13, während zwischen den beiden Rohrenden und den ihnen jeweils gegenüberliegenden Verschiebeeinheiten 13 noch ein freier Abstand verbleibt.

Anschließend wird in beide Verschiebeeinheiten 13 jeweils ein Flansch 2 der in Fig. 3 dargestellten Ausführungsvariante eingespannt, wobei die Verschiebeeinheiten 13 zu diesem Zweck jeweils ein pneumatisch betriebenes Backenfutter 14 umfassen, dessen drei Greifbacken 21 gegen die konisch zulaufende Innenfläche 22 des Flanschkragens 5 gedrückt sind und den Flanschstutzen 3 auf diese Weise jeweils in axialer Richtung mit der Längsachse A des Rohrabschnitts 4 fluchtend, lagestabil im Abstand zum jeweiligen Rohrende halten.

Um das Aufschrumpfen der Flansche 2 auf die endseitigen Rohrabschnitte 4 des Rohres 1 einzuleiten werden nachfolgend jeweils zwei halbschalenförmige Induktionsheizer 15, vorzugsweise automatisiert mittels einer entsprechenden, in Fig. 4 nicht dargestellten Positioniereinheit um den Außenumfang der eingespannten Flansche 2 zusammengefahren. Mit der Aufwärmung weitet sich jeweils der Innendurchmesser D und damit der Innenumfang der Flanschstutzen 3 auf, wodurch es ermöglicht wird, die Flanschstutzen 3 auf die endseitigen Rohrabschnitte 4 in Richtung der Pfeile "X" mittels eines in der Verschiebeeinheit 13 integrierten Linearantriebs 23 aufzuschieben, bis die Stirnflächen des Rohres 1 jeweils an der innenseitigen Stufe 20 des Flansches 2 anschlagen und die in Fig. 1 dargestellte Überlappungsstellung erreicht ist.

Hiernach werden die Flansche 2 entweder durch eine ebenfalls in der Montageeinrichtung 17 integrierte Kühlvorrichtung oder bei Raumlufttemperatur abgekühlt, wodurch sich die Innenwandungen 6 der Flanschstutzen 3 jeweils an die Außenwandungen der überlappten Rohrabschnitte 4 mit Presssitz anlegen.

Zur Fertigstellung der Verbindung wird nun in die Füllbohrung 8 der Flanschstutzen 3 jeweils ein Klebemittel 9, vorzugsweise ein Zweikomponentenkleber auf Epoxidharzbasis, zur stoffschlüssigen Abdichtung der Pressverbindung gemäß den Fig. 1 und 2 eingefüllt.

Die Einspannung der Flansche 2 in den Verschiebeeinheiten 13 kann nach erfolgter Kleberaushärtung schließlich gelöst und die fertige Baugruppe aus Rohr 1 und Flansch 2 der Endmontage zugeführt werden.

## Patentansprüche

1. Bauteil (1) mit einem Rohrabschnitt (4) und mit zumindest einem Flansch (2), wobei der Flansch (2) einen Flanschstutzen (3) aufweist, welcher mit dem Rohrabschnitt (4) des Bauteils (1) eine Pressverbindung ausbildet, und wobei an den Flanschstutzen (3) radial nach außen ein Flanschkragen (5) anschließt, der über Befestigungsmittel an ein anderes Bauteil festlegbar ist, um eine Verbindung zwischen den beiden Bauteilen herzustellen, **dadurch gekennzeichnet, dass** in der zur Pressverbindung gehörenden Kontaktfuge zwischen Flanschstutzen (3) und Rohrabschnitt (4) zumindest eine um die Längsachse (L) des Flansches (2) verlaufenden Nut (7) angeordnet ist, die über eine nach außen durchtretende Füllbohrung (8) mit einem Dichtmittel (9) zur Herstellung einer stoffschlüssig abgedichteten Pressverbindung befüllbar ist, wobei die seitlich an die Nut (7) anschließenden Bereiche des Flanschstutzens (3) und des Rohrabschnitts (4) über die gesamte Länge der Nut (7) in Pressverbindung miteinander stehen.

2. Bauteil nach Anspruch 1, **dadurch gekennzeichnet, dass** die Nut (7) an der mit dem Rohrabschnitt (4) des Bauteils (1) in Pressverbindung stehenden Innenwandung (6) des Flanschstutzens (3) angeordnet ist.

3. Bauteil nach Anspruch 1 oder 2, **dadurch gekennzeichnet, dass** in die mindestens eine Nut (7) eine nach außen durchtretende Entlüftungsbohrung (10) mündet.

4. Bauteil nach einem der Ansprüche 1 bis 3, **dadurch gekennzeichnet, dass** die mindestens eine Nut (7) als Ringnut (11', 11") ausgebildet ist.

5. Bauteil nach einem der Ansprüche 1 bis 4, **dadurch gekennzeichnet, dass** die mindestens eine Nut (7) als wendelförmige Nut (12) ausgebildet ist.

6. Bauteil nach Anspruch 5, **dadurch gekennzeichnet, dass** das erste Ende der wendelförmigen Nut (12) in einer ersten Ringnut (11') und/oder das zweite Ende der wendelförmigen Nut (12) in einer zweiten Ringnut (11") mündet.

7. Bauteil nach Anspruch 6, **dadurch gekennzeichnet, dass** in die erste Ringnut (11') von außen eine Füllbohrung (8) und in die zweite Ringnut (11") von außen eine Entlüftungsbohrung (10) einmündet.

8. Bauteil nach einem der Ansprüche 1 bis 7, **dadurch gekennzeichnet, dass** das Dichtmittel (9) von einem Zweikomponentenkleber auf Epoxidharzbasis gebildet ist.

9. Bauteil nach einem der Ansprüche 1 bis 8, **dadurch gekennzeichnet, dass** das Dichtmittel eine Viskosität von mehr als 10⁷ mPa*s besitzt.

10. Bauteil nach einem der Ansprüche 1 bis 9, **dadurch gekennzeichnet, dass** der Innendurchmesser des Flansches (2) vom Innendurchmesser (D) des mit dem Rohrabschnitt (4) in Pressverbindung stehenden Flanschstutzens (3) in einer Stufe (20) nach innen vorspringt, wobei diese Stufe (20) einen Längsanschlag (16) für die Stirnfläche des Rohrabschnitts (4) bildet.

11. Bauteil nach Anspruch 10, **dadurch gekennzeichnet, dass** zwischen der innenseitigen Stufe (20) des Flansches (2) und der Stirnfläche des Rohrabschnitts (4) ein Dichtkörper, beispielsweise ein O-Ring (24), eingelegt ist.

12. Bauteil nach einem der Ansprüche 1 bis 11, **dadurch gekennzeichnet, dass** zwischen dem Rohrabschnitt (4) des Bauteils (1) und dem Flanschstutzen (3) zumindest eine zusätzliche Dichtung, beispielsweise ein O-Ring, vorgesehen ist.

13. Verfahren zum Herstellen einer druckgasdichten Verbindung zwischen einem Bauteil (1), insbesondere einem Rohr oder einem Gehäuseteil, und einem Flansch (2), wobei der Flansch (2) aus einem mit einem Rohrabschnitt (4) des Bauteils (1) zu verbindenden Flanschstutzen (3) und aus einem radial nach außen aufgestellten Flanschkragen (5) besteht, mit den folgenden Schritten:
a) Einbringung einer Nut (7) in die Innenwandung (6) des Flanschstutzens (3), wobei die Nut (7) um die Längsachse (L) des Flansches (2) verläuft,
b) Positionsstabile Lagerung des Bauteils (1), so dass sich dessen Rohrabschnitt (4) entlang einer vorgegebenen Achse (A) erstreckt,
c) Einspannen des Flansches (2) in eine axiale Verschiebeinheit (13),
d) Koaxiales Ausrichten der Längsachse (L) des Flansches (2) mit der Längsachse (A) des Rohrabschnitts (4) des Bauteils (1),
e) Aufwärmen des Flansches (2) zur Aufweitung des Innenumfangs des Flanschstutzens (3),
f) Längsaxiales Aufschieben des Flanschstutzens (3) auf das Ende des Rohrabschnitts (4) des Bauteils (1) mittels der Verschiebeeinheit (13), so dass zumindest der mit der Nut (7) versehene Längserstreckungsbereich (S) des Flanschstutzens (3) den Rohrabschnitt (4) überlappt,
g) Abkühlen des Flansches (2) unter Herstellung einer Pressverbindung zwischen Flansch (2) und Bauteil (1), wobei die seitlich an die Nut (7) anschließenden Bereiche des Flanschstutzens (3) und des Rohrabschnitts (4) über die gesamte Länge der Nut (7) in Pressverbindung miteinander stehen.
h) Einfüllen eines flüssigen oder pastösen Dichtmittels (9) in die Nut (7), wobei das Dichtmittel (9) anschließend eine stoffschlüssige Verbindung zwischen Flanschstutzen (3) und Rohrabschnitt (4) des Bauteils (1) herstellt,
i) Lösen der Einspannung des Flansches (2) in der Verschiebeeinheit (13).

14. Verfahren nach Anspruch 13, **dadurch gekennzeichnet, dass** das Aufwärmen des Flansches (2) in Schritt e) durch Anlegen einer Induktionsheizung (15) an den Flansch (2) erreicht wird.

15. Verfahren nach Anspruch 13 oder 14, **dadurch gekennzeichnet, dass** das Dichtmittel (9) in Schritt h) von außen über eine Füllbohrung (8) in die Nut (7) eingefüllt wird.

## Claims

1. A component (1) with a pipe portion (4) and with at least one flange (2), the flange (2) comprising a flange connection piece (3), which forms a press-fit connection with the pipe portion (4) of the component (1), and a flange collar (5) adjoining the flange connection piece (3) radially to the outside, which flange collar may be fastened to another component by way of fastening means to produce a connection between the two components, **characterised in that** in the contact joint, associated with the press-fit connection, between flange connection piece (3) and pipe portion (4) there is arranged at least one groove (7) extending around the longitudinal axis (L) of the flange (2), which groove may be filled, via a filling bore (8) passing through to the outside, with a sealant (9) for producing a bond-sealed press-fit connection, the regions of the flange connection piece (3) and of the pipe portion (4) laterally adjoining the groove (7) being in press-fit connection with one another over the entire length of the groove (7).

2. A component according to claim 1, **characterised in that** the groove (7) is arranged in the internal wall (6) of the flange connection piece (3) in press-fit connection with the pipe portion (4) of the component (1).

3. A component according to claim 1 or claim 2, **characterised in that** a venting bore (10) passing through to the outside opens into the at least one groove (7).

4. A component according to any one of claims 1 to 3, **characterised in that** the at least one groove (7) takes the form of an annular groove (11', 11").

5. A component according to any one of claims 1 to 4, **characterised in that** the at least one groove (7) takes the form of a helical groove (12).

6. A component according to claim 5, **characterised in that** the first end of the helical groove (12) opens in a first annular groove (11') and/or the second end of the helical groove (12) opens in a second annular groove (11").

7. A component according to claim 6, **characterised in that** a filling bore (8) opens from outside into the first annular groove (11') and a venting bore (10) opens from outside into the second annular groove (11").

8. A component according to any one of claims 1 to 7, **characterised in that** the sealant (9) is formed of an epoxy resin-based two-component adhesive.

9. A component according to any one of claims 1 to 8, **characterised in that** the sealant has a viscosity of more than 10⁷ mPa*s.

10. A component according to any one of claims 1 to 9, **characterised in that** the internal diameter of the flange (2) protrudes inwards in a step (20) from the internal diameter (D) of the flange connection piece (3) in press-fit connection with the pipe portion (4), said step (20) forming a longitudinal stop (16) for the end face of the pipe portion (4).

11. A component according to claim 10, **characterised in that** a sealing member, for example an O-ring (24), is inserted between the inside step (20) of the flange (2) and the end face of the pipe portion (4).

12. A component according to any one of claims 1 to 11, **characterised in that** at least one additional seal, for example an O-ring, is provided between the pipe portion (4) of the component (1) and the flange connection piece (3).

13. A method of producing a compressed gas-tight connection between a component (1), in particular a pipe or a housing part, and a flange (2), the flange (2) consisting of a flange connection piece (3) to be connected to a pipe portion (4) of the component (1) and a flange collar (5) positioned radially to the outside, having the following steps:
a) introducing a groove (7) into the internal wall (6) of the flange connection piece (3), the groove (7) extending around the longitudinal axis (L) of the flange (2),
b) mounting the component (1) in positionally stable manner, such that the pipe portion (4) thereof extends along a predetermined axis (A),
c) clamping the flange (2) into an axial displacement unit (13),
d) coaxially aligning the longitudinal axis (L) of the flange (2) with the longitudinal axis (A) of the pipe portion (4) of the component (1),
e) heating the flange (2) to expand the internal circumference of the flange connection piece (3),
f) pushing the flange connection piece (3) in the direction of the longitudinal axis onto the end of the pipe portion (4) of the component (1) by means of the displacement unit (13), such that at least the region (S) of longitudinal extent of the flange connection piece (3) provided with the groove (7) overlaps the pipe portion (4),
g) cooling the flange (2), producing a press-fit connection between flange (2) and component (1), the regions of the flange connection piece (3) and of the pipe portion (4) laterally adjoining the groove (7) being in press-fit connection with one another over the entire length of the groove (7),
h) introducing a liquid or pasty sealant (9) into the groove (7), the sealant (9) then producing a bonded connection between flange connection piece (3) and pipe portion (4) of the component (1),
i) releasing clamping of the flange (2) in the displacement unit (13).

14. A method according to claim 13, **characterised in that** the heating of the flange (2) in step e) is achieved by applying an induction heater (15) to the flange (2).

15. A method according to claim 13 or claim 14, **characterised in that** in step h) the sealant (9) is introduced into the groove (7) from outside via a filling bore (8).

## Revendications

1. Elément structurel (1) comprenant un tronçon tubulaire (4) et au moins une bride (2), ladite bride (2) étant pourvue d'un embout (3) instaurant une liaison serrée avec ledit tronçon tubulaire (4) de l'élément structurel (1), sachant qu'une collerette (5), fusionnant dans ledit embout (3) de la bride, vers l'extérieur dans le sens radial, peut être assujettie à un autre élément structurel par l'intermédiaire de moyens de fixation, afin d'établir une jonction entre les deux éléments structurels, **caractérisé par le fait qu'**au moins une rainure (7) s'étendant autour de l'axe longitudinal (L) de la bride (2), pratiquée dans le joint qui fait partie intégrante de la liaison serrée et procure un contact entre ledit tronçon tubulaire (4) et l'embout (3) de ladite bride, peut être comblée par un moyen d'étanchement (9) à l'aide d'un perçage d'emplissage (8) s'étendant de part en part vers l'extérieur, en vue d'instaurer une liaison serrée à étanchéité matérielle, sachant que les régions dudit embout (3) de la bride et dudit tronçon tubulaire (4), qui sont latéralement attenantes à la rainure (7), sont en liaison serrée les unes avec les autres sur toute la longueur de ladite rainure (7).

2. Elément structurel selon la revendication 1, **caractérisé par le fait que** la rainure (7) est située sur la paroi intérieure (6) de l'embout (3) de la bride qui est en liaison serrée avec le tronçon tubulaire (4) dudit élément structurel (1).

3. Elément structurel selon la revendication 1 ou 2, **caractérisé par le fait qu'**un perçage de ventilation (10), s'étendant de part en part vers l'extérieur, débouche dans la rainure (7) à présence minimale.

4. Elément structurel selon l'une des revendications 1 à 3, **caractérisé par le fait que** la rainure (7), à présence minimale, est pratiquée sous la forme d'une rainure annulaire (11', 11").

5. Elément structurel selon l'une des revendications 1 à 4, **caractérisé par le fait que** la rainure (7), à présence minimale, est pratiquée sous la forme d'une rainure hélicoïdale (12).

6. Elément structurel selon la revendication 5, **caractérisé par le fait que** la première extrémité de la rainure hélicoïdale (12) débouche dans une première rainure annulaire (11'), et/ou la seconde extrémité de ladite rainure hélicoïdale (12) débouche dans une seconde rainure annulaire (11 ").

7. Elément structurel selon la revendication 6, **caractérisé par le fait qu'**un perçage d'emplissage (8) débouche dans la première rainure annulaire (11'), depuis l'extérieur, et un perçage de ventilation (10) débouche dans la seconde rainure annulaire (11 ") depuis l'extérieur.

8. Elément structurel selon l'une des revendications 1 à 7, **caractérisé par le fait que** le moyen d'étanchement (9) est constitué d'un adhésif à deux composants, à base de résine époxyde.

9. Elément structurel selon l'une des revendications 1 à 8, **caractérisé par le fait que** le moyen d'étanchement présente une viscosité supérieure à 10⁷ mPa*s.

10. Elément structurel selon l'une des revendications 1 à 9, **caractérisé par le fait que** le diamètre intérieur de la bride (2) est en débord vers l'intérieur, en décrivant un gradin (20), au-delà du diamètre intérieur (D) de l'embout (3) de ladite bride qui est en liaison serrée avec le tronçon tubulaire (4), ledit gradin (20) formant une butée longitudinale (16) dédiée à la face extrême dudit tronçon tubulaire (4).

11. Elément structurel selon la revendication 10, **caractérisé par le fait qu'**un corps d'étanchement, par exemple une bague torique (24), est interposé entre le gradin intérieur (20) de la bride (2) et la face extrême du tronçon tubulaire (4).

12. Elément structurel selon l'une des revendications 1 à 11, **caractérisé par le fait qu'**au moins une garniture d'étanchement additionnelle, par exemple une bague torique, est prévue entre l'embout (3) de la bride et le tronçon tubulaire (4) dudit élément structurel (1).

13. Procédé d'instauration d'une liaison, étanche aux gaz comprimés, entre une bride (2) et un élément structurel (1) se présentant notamment comme une tubulure ou une partie de boîtier, ladite bride (2) étant constituée d'un embout (3) conçu pour être relié à un tronçon tubulaire (4) dudit élément structurel (1), et d'une collerette (5) dressée vers l'extérieur dans le sens radial, englobant les étapes suivantes :
a) façonnage d'une rainure (7) dans la paroi intérieure (6) de l'embout (3) de la bride, ladite rainure (7) s'étendant autour de l'axe longitudinal (L) de ladite bride (2),
b) montage de l'élément structurel (1) en position stable, de façon telle que le tronçon tubulaire (4) de ce dernier s'étende le long d'un axe (A) préétabli,
c) ablocage de la bride (2) dans une unité (13) imprimant des coulissements axiaux,
d) orientation coaxiale de l'axe longitudinal (L) de ladite bride (2) avec l'axe longitudinal (A) du tronçon tubulaire (4) de l'élément structurel (1),
e) réchauffement de la bride (2), en vue d'élargir le pourtour intérieur de l'embout (3) de ladite bride,
f) enfilement dudit embout (3) de ladite bride sur l'extrémité dudit tronçon tubulaire (4) de l'élément structurel (1) dans le sens de l'axe longitudinal, au moyen de l'unité (13) imprimant des coulissements, de telle sorte que ledit tronçon tubulaire (4) soit chevauché au moins par la zone (S) de l'étendue longitudinale dudit embout (3) de ladite bride qui est pourvue de la rainure (7),
g) refroidissement de la bride (2) en instaurant une liaison serrée entre ladite bride (2) et l'élément structurel (1), sachant que les régions de l'embout (3) de ladite bride et du tronçon tubulaire (4), qui sont latéralement attenantes à la rainure (7), sont en liaison serrée les unes avec les autres sur toute la longueur de ladite rainure (7),
h) déversement d'un agent d'étanchement (9) liquide ou pâteux, dans la rainure (7), ledit moyen d'étanchement (9) instaurant, dans l'enchaînement, une liaison matérielle entre l'embout (3) de la bride et le tronçon tubulaire (4) dudit élément structurel (1),
i) suppression de l'ablocage de ladite bride (2) dans ladite unité (13) imprimant des coulissements.

14. Procédé selon la revendication 13, **caractérisé par le fait que** le réchauffement de la bride (2), à l'étape e), est obtenu en appliquant un chauffage à induction (15) sur ladite bride (2).

15. Procédé selon la revendication 13 ou 14, **caractérisé par le fait qu'**à l'étape h), le moyen d'étanchement (9) est déversé dans la rainure (7) depuis l'extérieur, par l'intermédiaire d'un perçage d'emplissage (8).
